# EUROPEAN PATENT APPLICATION

(11) **EP 3 757 931 A1**
(43) Date of publication of application: **30.12.2020**
(21) Application number: 19382543.7
(22) Date of filing: 26.06.2019
(51) Int. Cl.: G06Q 30/06

(54) **METHOD, SYSTEM AND COMPUTER PROGRAMS FOR ONLINE SHOPPING OF EDIBLE PRODUCTS EXPOSED IN A COUNTER**

(71) Applicant: Gomà Huguet, Anton, 08172 Sant Cugat del Vallès (ES); Cerdán Ortega, Albert, 08174 Sant Cugat del Vallès (ES); Ramos Gana, Ander, 08349 Cabrera de Mar (ES)
(72) Inventor: Gomà Huguet, Anton, 08172 Sant Cugat del Vallès (ES); Cerdán Ortega, Albert, 08174 Sant Cugat del Vallès (ES); Ramos Gana, Ander, 08349 Cabrera de Mar (ES)
(74) Representative: Juncosa Miró, Jaime

(57) **Abstract**

A method, system and computer program for online shopping of edible products exposed in a counter comprising receiving, by processing unit (100), real-time data of said counter, said real-time data being acquired by an image acquisition system (110) and including an image showing products exposed in the counter and labels associated to each product, each label containing information including a name of the product and its associated price; analyzing the received real-time data and as a result providing a register (101) with a list including the name of each product and its associated price; c) checking, whether said register (101) coincides with the historical information of a database (120); and receiving, by a user interface (131), a request for a purchasing order from a user, said request including a selection of a product whose label is activable and a quantity thereof.

## Description

### Technical Field

The present invention is directed, in general, to online shopping methods and systems. In particular, the invention relates to a method, to a system and to computer program products for online shopping of edible products exposed in a counter, in particular fresh products such as meats, fish, charcuterie, cheeses, fruits, vegetables, breads, among others.

### Background of the Invention

Some online shopping methods and systems are known.

For example, US 9967446-B2 discloses a personalized shopping mall system using a virtual camera, which can make a user feel as if he or she is actually visiting and shopping at the offline shop by creating a virtual camera having a different ROI from an image of the offline shop captured by a physical camera and streaming a shopping mall page including the virtual camera.

US 8751318-B2 discloses a method and a system for managing and controlling a store. The system includes a digital display shelf being provided with a recognition unit configured to recognize a product displayed on the shelf and an output unit configured to output information on the recognized product, a digital signage display configured to output data respective to the recognized product, and a managing system configured to communicate with the digital display shelf and the digital signage display so as to transmit control data and to receive processing data. The data respective to the recognized product may include at least one of audio data, video data, and text data configured to advertise and promote the corresponding product. The managing system may include a database related to the data respective to the recognized product.

WO 0109748-A2 discloses methods and systems for real-time shopping of a remote physical location over a computer network. This invention integrates so-called "telepresence" systems with on-line, electronic commerce and merchandising systems to achieve a novel, real-time shopping experience. Unlike conventional on-line catalogs, the invention proposed in this international patent application allows the user to visually navigate in real-time within an actual, physical space in order to view physical objects located therein, and to select or identify such objects for purchase or further inspection. Users navigate through the physical space by viewing images captured by cameras located within the space and remotely controlling the cameras by means of a user interface to capture additional images of other selected regions within the space. According to the invention, the user interface allows the user to identify or select viewed objects for purchase or further inquiry.

### Description of the Invention

Present invention proposes, according to one aspect, a method for online shopping of edible products exposed in a counter. According to the proposed method, a processing unit is operatively connected to at least one image acquisition system, to a database and to a user interface. The cited database contains historical information of edible products that can be exposed in a counter of a physical location. The historical information includes, at least, the name of the products and its associated prices. The image acquisition system is located in said physical location and has a field of view focused on the counter. The user interface is implemented on a user computing device such as a PC, a smartphone, a laptop, a tablet, a smart glasses or virtual-reality glasses, etc. and allows a user/shopper to select a product exposed in said counter based on real-time data acquired by the image acquisition system.

The proposed method comprises a) receiving, at said processing unit, every certain time or whenever there is a change in the scene of the counter, real-time data of the counter, said real-time data being acquired by the image acquisition system and including at least one image showing the products exposed in the counter and labels associated to each product, each label containing information including a name of the product and its associated price. Moreover, the method comprises b) analyzing, by said processing unit, the received real-time data using a machine learning model, said machine learning model detecting the labels within the real-time data, identifying a position of the labels in the counter and identifying said information contained in the labels. As a result of said analysis the processing unit further providing a register with a list at least including the name of each product and its associated price. Then, the processing unit checks whether said register coincides with the historical information of the database by comparing the name of the products, and its associated prices, of the register with the name of the products, and its associated prices, of the database.

If no deviation with the name of the products or the associated price exists, the processing unit causes the labels to be activable via the user interface. If a deviation with the name of a given product exists, the processing unit causes the label of said given product to be activable via the user interface only if the deviation makes it possible to identify the name of the given product. If a deviation with the associated price of a given product exists, the processing unit changes the associated price of said given product in the database to the associated price of said given product of the register and further causes the label of the given product to be activable via the user interface.

Finally, the proposed method comprises d) receiving, at the user interface, a request for a purchasing order from the user via the user interface, said request being received upon the user interface showing real-time data and said request at least including a selection of a product whose label is activable and a quantity thereof, such that the purchased order can be added to a user interface shopping cart.

In particular, according to the proposed method, the edible products are fresh products such as meats, fish, charcuterie, cheeses, fruits, vegetables, breads, etc.

In an embodiment, in said step b) the machine learning model further identifies the products from the real-time data by crossing stored information on how every product looks like and the names of the product included in the labels nearby.

In a particular embodiment, the machine learning model is a convolutional neural network. It should be noted that in other embodiments other machine learning models can be used, for example a Bayesian network or a full resolution residual network (FRRN), among others.

According to the proposed method, in step d) the cited selection of the given product can be performed either by clicking in the label associated to the product or by clicking on the image of the product.

Moreover, the list of the register can also include a timestamp of the analysis and an indication of the position of the product in the counter.

In an embodiment, the request further includes an indication of how the product has to be served, for example in slices, cleaned, spine-free, etc.

Other embodiments of the present invention also provide according to another aspect a system for online shopping of edible products exposed in a counter. The system comprises:
- a database that contains historical information of edible products, including the name of the products and its associated prices, that can be exposed in a counter of a physical location;
- at least one image acquisition system located in said physical location and having a field of view focused on the counter;
- a user interface configured to be implemented on a user computing device, for example a computer, among others, and to allow a user to select a product exposed in said counter based on real-time data acquired by the image acquisition unit;
- a processing unit, wherein the processing unit is operatively connected to said at least one image acquisition system, said database and said user interface;
- software executable on the processing unit configured to:
   a) receive, every certain time interval or whenever a change in the image of the counter is detected by the system, real-time data of said counter, said real-time data being acquired by the image acquisition system and including at least one image showing the products exposed in the counter and labels associated to each product, each label containing information including a name of the product and its associated price;
   b) analyze, the received real-time data using a machine learning model, said machine learning model detecting the labels within the real-time data, identifying a position of the labels in the counter and identifying said information contained in the labels, the processing unit as a result of said analysis further providing a register with a list at least including the name of each product and its associated price;
   c) check whether said register coincides with the historical information of the database by comparing the name of the products, and its associated prices, of the register with the name of the products, and its associated prices, of the database, wherein if no deviation with the name of the products or the associated price exists, the processing unit causes said labels to be activable via the user interface; wherein if a deviation with the name of a given product exists, the processing unit causes the label of said given product to be activable via the user interface only if the deviation makes it possible to identify the name of the given product; and wherein if a deviation with the associated price of a given product exists, the processing unit changes the associated price of said given product in the database to the associated price of said given product of the register and further causes the label of the given product to be activable via the user interface.

Furthermore, the user interface is further configured to receive a request for a purchasing order from the user via the user interface, said request being received upon the user interface showing real-time data and said request at least including a selection of a product whose label is activable and a quantity thereof, such that the purchased order can be added to a user interface shopping cart.

In an embodiment, the image acquisition system is a camera, for example a pan-tilt-zoom camera or a microscope camera. In other embodiments the system comprises two or more cameras. In this case, each camera has its field of view oriented towards the counter and is configured to acquire the real-time data to be further processed by the processing unit. The two or more cameras can be equal or different. The system preferably also includes one or more microphones, such as omnidirectional or directional microphones. Thus, by means of the camera(s) (conventional or microscopy) and (optionally) the microphone(s), the user will be able to feel like being in the shop and to have, at least, the same information to decide about products like if (s)he was really there.

In a particular embodiment the machine learning model includes a convolutional neural network.

The list of the register can also include a timestamp of the analysis and an indication of the position of the product in the counter. Moreover, the request can further include an indication of how the product has to be served.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Thus, present invention provides an online shopping architecture intended to immerse the user/shopper in the experience of buying or consulting edible products as if (s)he was buying/consulting them in a real shop. By performing the cited checking, the user will only be able to purchase the current stock (i.e. the products) present in the counter and at the marked price.

### Brief Description of the Drawings

The previous and other advantages and features will be more fully understood from the following detailed description of embodiments, with reference to the attached figures, which must be considered in an illustrative and non-limiting manner, in which:
Fig. 1 is a schematic illustration of the proposed system for online shopping of edible products exposed in a counter.
Fig. 2 is a flow chart illustrating a method for online shopping of edible products exposed in a counter, according to an embodiment of the present invention.

### Detailed Description of Preferred Embodiments

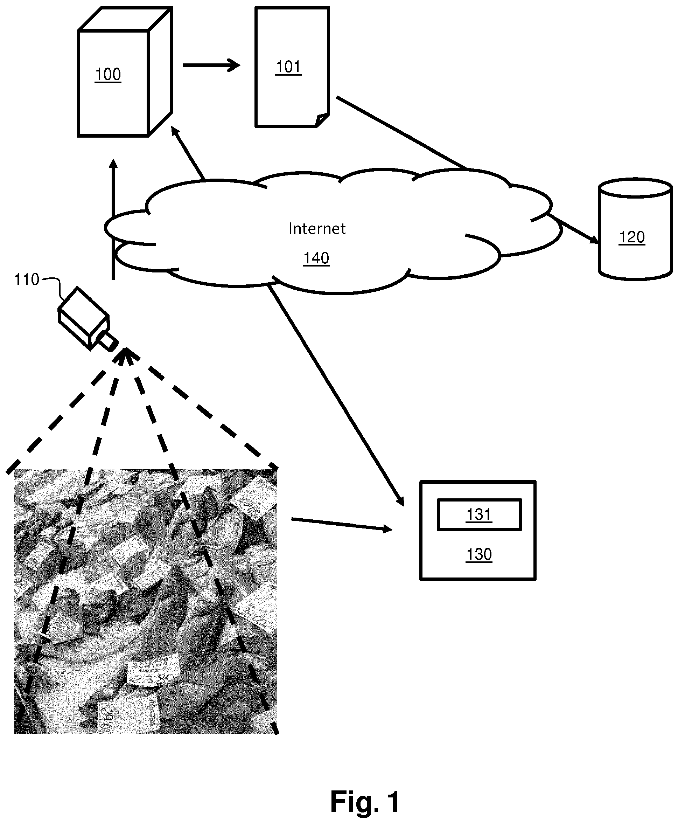

Fig. 1 shows an embodiment of the proposed architecture of the invention, according to an aspect. As can be seen, the system of this embodiment includes a processing unit 100 which is operatively connected to an image acquisition system 110, to a database 120 and to a user interface 131 via a communications network 140 such as the Internet.

The processing unit 100 or image analyzer preferably comprises a set of CPU and GPU and can implement image analysis techniques such as Machine Learning techniques. For example a Convolutional Neural Network, among others.

The image acquisition unit 110 of this embodiment is a camera, either a pan-tilt-zoom camera or a microscope camera, which is located in a physical location, in particular a shop. The camera 110 is configured to have its field of view focused on a counter of said physical location. In the counter different edible products can be exposed. In this particular embodiment, the products are different types of fish, for example salmon, cod, tuna, etc.

The database 120 contains historical information of said edible products that can be exposed in said counter of the physical location. In particular, the historical information includes the name of the products and its associated prices. By historical information it should be referred the information from the previous day or if the database is updated the previous information prior to the update. Furthermore, the database 120 further stores a library of usual texts referring to each particular product, where said usual texts are edible by the shopkeeper, for example.

The user interface 131 is configured to be implemented on a user computing device 130, for example a PC, a Smartphone, a Tablet, a virtual-reality glasses, etc. The user interface allows a user/buyer to select a product exposed in said counter based on real-time data acquired by the image acquisition unit 110.

In other embodiments, in this case not illustrated for simplicity of the figures, the proposed system comprises two, or more, image acquisition units 110, each one having its field of view focused on said counter.

Moreover, the system of any of the detailed embodiments can further include one or more microphones, either omnidirectional or directional microphones. The microphone(s) can be provided for two possible purposes: first, just for a one-way communication from shop to user/buyer using an omnidirectional microphone, intended to improve the user's immersion experience who will hear the same marketplace sounds as if the user was there; second, a more directional microphone oriented towards the shopkeeper position together with a highspeaker placed also in the shop, both intended to provide a two-way and full duplex audio communication channel between user and shopkeeper. The shopkeeper will keep the right to turn that channel switched off or on depending on his/her availability for remote buyers in front to local tasks. When not available, such status will be shown in the web and the buyer's calling procedure will be inhibited. When available, the first user/buyer asking for a direct conversation with the shopkeeper will be served by the system, inhibiting the rest following a First in-First out (FIFO) queue logic of buyers willing to talk.

General view cameras can also be included in the proposed system. This type of cameras besides reinforcing the presence experience when showed in the buyer's platform will also let the system to have information about people flows in the marketplace premises. This information can be of interest for the shop managers to improve their sales strategies.

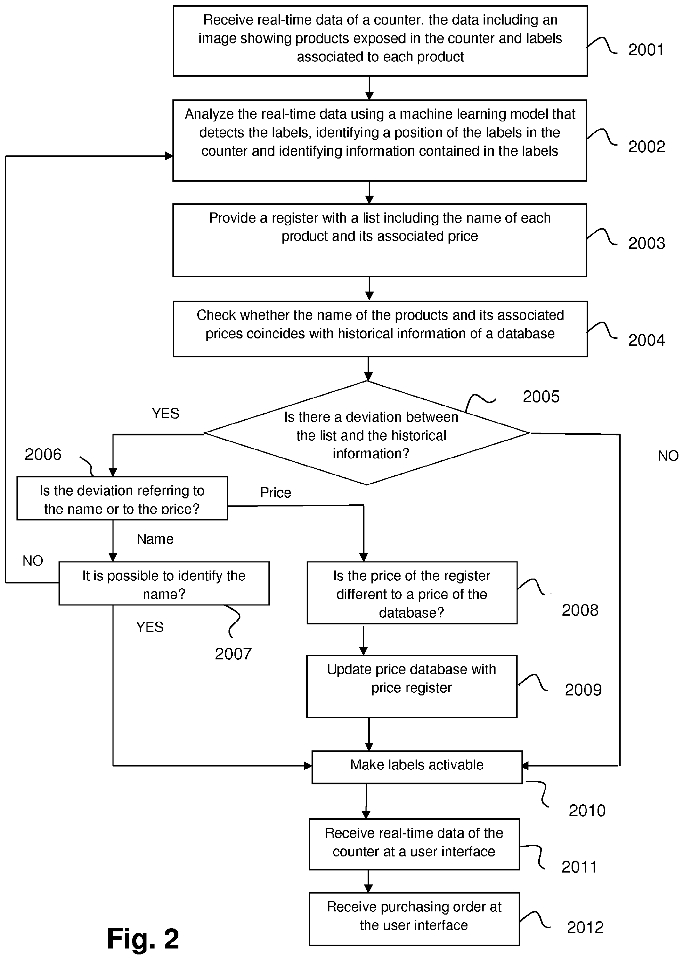

With reference now to Fig. 2, therein it is illustrated an embodiment of a method for online shopping of edible products exposed in a counter (e.g. fresh products such as meats, fish, charcuterie, cheeses, fruits, vegetables, breads, etc.). According to this embodiment, the method comprises, at step 2001, receiving, at said processing unit 100, through some communication technology (Ethernet, Wi-Fi, Bluetooth, etc.), every certain time interval, real-time data of said counter, said real-time data including at least one image showing the products exposed in the counter and labels associated to each product. Each label contains information of the name of the product and its associated price. For example, for the particular case of fish products, the labels can show the following information:
- label 1: "Salmon", "19€/kg"
- label 2: "Cod", "12€/kg"
- label 3: "Tuna", "21€/kg"
- label 4: "Lubine", "14€/kg".

Then, at step 2002, the processing unit 100 analyzes the received real-time data using a machine learning model that detects the labels within the real-time data, identifies the position of the labels in the counter and identifies said information contained in the labels. The processing unit 100 as a result of said analysis further provides, step 2003, a register 101 with a list at least including the name of each product and its associated price. In other embodiments, the list can further include a timestamp of the analysis and an indication of the position of the product in the counter.

Since text and price recognition from labels may occasionally fail in the cited recognition process, the processing unit 100, at step 2004, compares the name of the products, and its associated prices, of the register 101 with the name of the products, and its associated prices, of the database 120 to check if any deviation exists. That is, the processing unit 100 checks if the data that has been acquired and analyzed coincides with the previously stored information of the database 120.

If no deviation between the list and the historical information of the database 120 exists, the processing unit 100 causes said labels to be activable via the user interface 131 (step 2010). On the other hand, if a deviation exists, the processing unit 100 checks from where the deviation comes, if from the name of a given product or from an associated price (step 2006).

If the deviation comes from the name of a given product, the processing unit 100 will only cause the label of said given product to be activable via the user interface 131 (step 2010) if the name of the product can be identified (step 2007), i.e. if the error is due an small spelling failure. That is, if for example from the analysis of the real-time data the processing unit 100 has indicated the name of a product as "Salmx" in the register 101, instead of "Salmon". In any case, if in step 2007 the name of the product cannot be identified, the analysis of the real-time data is repeated.

On the other hand, if the deviation comes from the price, the processing unit 100 checks, at step 2008, whether the price of a given product included in the register 110 coincides with the price of said given product in the database 120. If both prices do not coincide, the processing unit 100 updates (step 2009) the historical information of the database 120 with said current price of the register 110. That is, if for example from the analysis of the real-time data the processing unit 100 has indicated that the price of the lobster is 45€/unit in the register 101 and the historical information of the database showed a lower or a higher price for the lobster. Once the database 120 is updated, the processing unit 100 makes the label of the lobster activable via the user interface 131.

If after several attempts it is not possible to identify a name or a price of a product, the corresponding label of said product is no longer activable and an alert will be sent to a computing device of the shopkeeper through some communications technology, like e-mail, SMS, WhatsApp or through an specific interface for the maintenance of his/her virtual shop.

Finally, the user interface 131 receives, at step 2011, real-time data of the counter acquired by the image acquisition unit(s) 110 and also, optionally, by the microphone(s), and the user interface 131 further receives, step 2012, a request for a purchasing order from the user via the user interface 131. The request at least includes a selection of a product, for example, "Tuna", and a quantity thereof. Moreover, in an embodiment, the request further includes an indication of how the "Tuna" has to be server, i.e. in filets, cut into smalls pieces, only cleaned, etc.

In yet another embodiment, in said step 2022, the machine learning model further identifies the displayed products in the real-time data. This can be done based on a specifically trained Convolutional Neural Network and Continuous Learning by crossing recorded information on how every product looks like and the names displayed in the labels nearby. Relative position of the product in the showcase with respect to its label will be also considered by the learning algorithm. For instance, any product close to the label "chicken" will be a candidate to be considered "chicken". That one with an image more similar to images recorded as "chicken" till the moment, according the recognition neural network, will be the image assigned to "chicken" in the system at that specific moment. Such assignation will be dynamic, since the shopkeeper may take the chicken out of the showcase and bring it back to a slightly different position some later, after serving a part of it.

Thanks to that recognition, in the user interface 131 a product can be selected either by clicking its label or its actual image.

Various aspects of the method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Non-volatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A method for online shopping of edible products exposed in a counter, wherein a processing unit (100) is operatively connected to at least one image acquisition system (110), a database (120) and a user interface (131), said database (120) containing historical information of edible products, including a name of the products and its associated prices, that can be exposed in a counter of a physical location, said at least one image acquisition system (110) being located in said physical location and having a field of view focused on the counter, and said user interface (131) being implemented on a user computing device (130) and allowing a user to select a product exposed in said counter based on real-time data acquired by the image acquisition system (110), the method comprising:
a) receiving, at said processing unit (100), every certain time interval or whenever scene of counter varies, real-time data of said counter, said real-time data being acquired by the image acquisition system (110) and including at least one image showing the products exposed in the counter and labels associated to each product, each label containing information including a name of the product and its associated price;
b) analyzing, by said processing unit (100), the received real-time data using a machine learning model, said machine learning model detecting the labels within the real-time data, identifying a position of the labels in the counter and identifying said information contained in the labels, the processing unit (100) as a result of said analysis further providing a register (101) with a list at least including the name of each product and its associated price;
c) checking, by the processing unit (100), whether said register (101) coincides with the historical information of the database (120) by comparing the name of the products, and its associated prices, of the register (101) with the name of the products, and its associated prices, of the database (120),
wherein if no deviation with the name of the products or the associated price exists, the processing unit (100) causes said labels to be activable via the user interface (131);
wherein if a deviation with the name of a given product exists, the processing unit (100) causes the label of said given product to be activable via the user interface (131) only if the deviation makes it possible to identify the name of the given product; and
wherein if a deviation with the associated price of a given product exists, the processing unit (100) changes the associated price of said given product in the database (120) to the associated price of said given product of the register (101) and further causes the label of the given product to be activable via the user interface (131); and
d) receiving, at the user interface (131), a request for a purchasing order from the user via the user interface (131), said request being received upon the user interface (131) showing real-time data and said request at least including a selection of a product whose label is activable and a quantity thereof, such that the purchased order can be added to a user interface shopping cart.

2. The method of claim 1, wherein in said step b) the machine learning model further identifies the products from the real-time data by crossing stored information on how every product looks like and the names of the product included in the labels nearby.

3. The method of claim 1 or 2, wherein the machine learning model includes a convolutional neural network.

4. The method of any of previous claims, wherein in said step d) said selection of the given product is performed either by clicking in the label associated to the product or by clicking on the image of the product.

5. The method of any of previous claims, wherein the list of the register (101) further includes a timestamp of the analysis and an indication of the position of the product in the counter.

6. The method of any of previous claims, wherein said request further includes an indication of how the product has to be served.

7. The method of any of previous claims, wherein the edible products are fresh products including meats, fish, charcuterie, cheeses, fruits, vegetables or breads.

8. A system for online shopping of edible products exposed in a counter, comprising:
- a database (120) that contains historical information of edible products, including a name of the products and its associated prices, that can be exposed in a counter of a physical location;
- at least one image acquisition system (110) located in said physical location and having a field of view focused on the counter;
- a user interface (131) configured to be implemented on a user computing device (130) and to allow a user to select a product exposed in said counter based on real-time data acquired by the image acquisition unit (110);
- a processing unit (100), wherein the processing unit (100) is operatively connected to said at least one image acquisition system (110), said database (120) and said user interface (131);
- software executable on the processing unit (100) configured to:
a) receive, every certain time interval or whenever scene of the counter varies, real-time data of said counter, said real-time data being acquired by the image acquisition system (110) and including at least one image showing the products exposed in the counter and labels associated to each product, each label containing information including a name of the product and its associated price;
b) analyze, the received real-time data using a machine learning model, said machine learning model detecting the labels within the real-time data, identifying a position of the labels in the counter and identifying said information contained in the labels, the processing unit (100) as a result of said analysis further providing a register (101) with a list at least including the name of each product and its associated price;
c) check whether said register (101) coincides with the historical information of the database (120) by comparing the name of the products, and its associated prices, of the register (101) with the name of the products, and its associated prices, of the database (120),
wherein if no deviation with the name of the products or the associated price exists, the processing unit (100) causes said labels to be activable via the user interface (131);
wherein if a deviation with the name of a given product exists, the processing unit (100) causes the label of said given product to be activable via the user interface (131) only if the deviation makes it possible to identify the name of the given product; and
wherein if a deviation with the associated price of a given product exists, the processing unit (100) changes the associated price of said given product in the database (120) to the associated price of said given product of the register (101) and further causes the label of the given product to be activable via the user interface (131); and
wherein the user interface (131) is further configured to receive a request for a purchasing order from the user via the user interface (131), said request being received upon the user interface (131) showing real-time data and said request at least including a selection of a product whose label is activable and a quantity thereof, such that the purchased order can be added to a user interface shopping cart.

9. The system of claim 8, wherein said image acquisition system (110) includes a camera including a pan-tilt-zoom camera and/or a microscope camera.

10. The system of claim 8 or 9, further comprising one or more microphones, wherein the microphones are either omnidirectional or directional microphones.

11. The system of any of the claims 8 to 10, wherein the machine learning model includes a convolutional neural network.

12. The system of claim 8, wherein the list of the register (101) further includes a timestamp of the analysis and an indication of the position of the product in the counter.

13. The system of claim 8, wherein said request further includes an indication of how the product has to be served.

14. The system of any of the claims 8 to 13, wherein the edible products are fresh products including meats, fish, charcuterie, cheeses, fruits, vegetables or breads.

15. A non-transitory computer readable medium comprising software instructions that when executed by a processor of a computing system implement the method of any of claims 1 to 7.
